# EUROPÄISCHE PATENTANMELDUNG

(11) **EP 1 396 416 A1**
(43) Veröffentlichungstag der Anmeldung: **10.03.2004**
(21) Anmeldenummer: 03405605.1
(22) Anmeldetag: 20.08.2003
(51) Int. Cl.: B62D 25/14, B62D 1/16

(54) **Querträger in Blechschalenbauweise**

(30) Priorität: 05.09.2002 DE 10241532; 03.07.2003 DE 10329897
(71) Anmelder: Alcan Technology & Management Ltd., 8212 Neuhausen am Rheinfall (CH)
(72) Erfinder: Gallasch, Olaf, 78224 Singen (DE); Hein, Jörg, 78256 Steisslingen (DE)

(57) **Zusammenfassung**

Bei einem Querträger (10) in Blechschalenbauweise für ein Instrumententafelfeld im Automobilbau mit einem Anschlussblock (24) für eine Lenksäule ist ein dem Lenksäulenbereich zugeordnetes, mit einer Bodenplatte (26) und einer an diese angeformten Längswand (30) versehenes Gussteil (24) mit einer querschnittlich winkelartig aus einem Blech geformten Halbschale (12) fest verbunden; Gussteil sowie Halbschale (12) bilden ein geschlossenes Profil (10) und begrenzen miteinander einen Innenraum (11). Die Halbschale (12) weist eine Seitenwand (14) sowie eine dazu etwa rechtwinkelige Querwand (16) auf, zudem sollen die Seitenwand einer Längskante (28) der Bodenplatte (26) und die Querwand der Firstfläche (29) der Längswand (30) zugeordnet sein.

## Beschreibung

Die Erfindung betrifft einen Querträger in Blechschalenbauweise für ein Instrumententafelfeld im Automobilbau nach dem Oberbegriff des Anspruches 1.

Querträger dieser Art dienen der Aufnahme von verschiedenen Bauteilen im Bereich des Cockpits und der Instrumententafel. Die höchste Belastung liegt dabei in der Aufnahme der Lenksäule. Der Querträger wird vor allem an den sog. A-Säulen -- den ersten Säulen in der Seitenwand des Fahrzeugs, die zur Aufnahme einer Vordertüre dient -- mit der Karosserie des Fahrzeuges verbunden. Zusätzlich wird der Querträger gegen die Stirnwand -- also die Trennwand zwischen Motorenraum und Fahrzeuginnenraum -- und den Fahrzeugboden mit Streben abgestützt.

Bekannt sind Blechschalenprofile aus zwei oder vier Blechteilschalen, die miteinander zu einem geschlossenen Profilquerschnitt durch Schweißen, Kleben, Clinchen, Bördeln verbunden werden. Um eine hohe Biege- und Torsionssteifigkeit zu erreichen, werden zusätzlich Verstärkungselemente -- Blechteile, Strangpressprofile -eingesetzt, die den geschlossenen Querschnitt von innen her abstützen. Eine feste Verbindung zwischen den Verstärkungselementen und den Blechhalbschalenquerschnitt ist notwendig und wird dadurch erreicht, dass die Bauteile miteinander fest verbunden, beispielsweise verschraubt oder verschweißt, werden. Zudem sind Knotenbereiche vorgesehen, um die Kraftübertragung -- die Abstützkraft oder Lenkung durch den Fahrer -- von der Lenksäule auf den Querträger zu optimieren. Die Aufnahme der Lenksäule wird meistens über ein Lagerbock aus Aluminium- oder Magnesiumgussmaterial gewährleistet, um die Kraftübertragung -- Abstützkraft an der Lenkung durch den Fahrer -- optimal auf den Querträger sicher zu stellen. Der Lagerbock wird dazu über mehrere Verschraubungen mit dem Querträger verbunden.

Die Kräfte -- Abstützkraft an der Lenkung durch den Fahrer sowie Gewichtskraft durch das gesamte Cockpit -- werden hauptsächlich im Bereich der Fahrerseite übertragen, weshalb auf der Beifahrerseite ein großer Querschnitt der zusammengeschweißten Blechhalbschalen nicht mehr erforderlich ist; statt dessen wird über eine Blechhalbschale ein Profil oder Gussteil als Stütze zum Fahrzeugboden der Querträger abgestützt. Der Querschnitt an der Fahrerseite und der Querschnitt an der Beifahrerseite sowie die genannte Stütze werden über einen Verbindungsknoten als weiteres Bauteil miteinander verbunden.

In Kenntnis dieser Gegebenheiten hat sich der Erfinder das Ziel gesetzt, eine Blechschalenbauweise zu finden, dank deren die Konstruktion erheblich vereinfacht wird.

Zur Lösung dieser Aufgabe führt die Lehre des unabhängigen Anspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß ist ein dem Lenksäulenbereich zugeordnetes, mit einer Bodenplatte und einer an diese angeformten Längswand versehenes Gussteil mit einer querschnittlich winkelartig aus einem Blech geformten Halbschale fest verbunden, und Gussteil sowie Halbschale bilden ein geschlossenes Profil. Zudem soll die Längswand in Abstand zu den Längskanten von der Bodenplatte aufragen, wobei der Abstand der Längswand von der einen Längskante der Bodenplatte bevorzugt etwa dem halben Abstand von deren anderen Längskante entspricht. Im übrigen sollen die Dicken der beiden Längskanten der Bodenplatte von unterschiedlicher Länge sein.

Nach einem weiteren Merkmal der Erfindung weist die Halbschale eine Seitenwand sowie eine dazu etwa rechtwinkelige Querwand auf, wobei die Seitenwand einer Längskante der Bodenplatte und die Querwand der Firstfläche der Längswand zugeordnet sind; Gussteil und Halbschale begrenzen vorteilhafterweise miteinander einen Innenraum, der in einer günstigen Ausgestaltung etwa rechteckigen Querschnittes ist.

Die Halbschale des Querträgers soll mit dem Gussteil fest verbunden sein, d.h. Gussteil und Halbschale sind bevorzugt miteinander verschweißt.

Erfindungsgemäß ist zwischen Gussteil und Halbschale zumindest ein Schotteil aus zwei parallelen Wandplatten festgelegt. Die Halbschale soll das Gussteil beidends überragen sowie die Halbschale durch eine zweite Halbschale zu dem Querträger ergänzt sein.

Es liegt im Rahmen der Erfindung, dass der Querträger einends durch einen Gusskörper verschlossen und an diesen ein Hohlprofil geringeren Querschnitts aus zwei Halbschalen angefügt ist; eine Winkelkante des Hohlprofils geringeren Querschnitts soll dabei mit einer Winkelkante des Hohlprofils größeren Querschnitts fluchten und das Hohlprofil geringeren Querschnitts an seinem freien Ende mit einem Schließteil versehen sein.

Für den Bereich der Fahrerseite -- A-Säulen-Anbindung bei Fahrzeugmitte -- wird also eine Halbschale aus Gusswerkstoff verwendet, welches mit einer Blechhalbschale verschweißt wird und somit ein geschlossenes Profil darstellt. In das Gussteil sollen folgende Einzelbauteile integriert sein:
- Schließteil fahrerseits (verstärkt den Halbschalenprofilquerschnitt im Bereich der Anbindung zur A-Säule);
- Schotteile Lenkung (verstärkt den Halbschalenprofilquerschnitt im Bereich der Anbindung des Lagerbocks der Lenkung);
- Verbindungsknoten (verstärkt den Halbschalenprofilquerschnitt im Bereich der Anbindung zur Stütze als Verbindung des Querträgers mit dem Fahrzeugboden);
- Lagerbock Lenkung (Aufnahme der Lenksäule);
- Aufnahme für verschiedene Anbindungsteile des sog. Cockpits (Elektrik, Klimaanlage, Instrumententafel).

Das Gussteil wird als Halbschalenelement in einer Druckgussform gegossen; der Querschnitt ist in einer Richtung geöffnet. Dann wird durch das Verbinden --Schweißen, Kleben, Schrauben -- des Druckgussteils mit einer Blechhalbschale der Querschnitt geschlossen, was zu einer hohen Steifigkeit des Querträgers gegen Torsion und Biegung führt.

Die Beifahrerseite kann als Strangpressprofil oder Blechhalbschalenbauweise dargestellt werden, welches mit der Fahrerseite (Guß-Blech-Teil) verschraubt, verschweißt oder anderweitig verbunden wird. Die Abstützung des Querträgers gegenüber dem Fahrzeugboden wird weiterhin über eine verschraubte Stütze sichergestellt.

Durch die hohe Flexibilität in der Bauteilgeometrie des Gussteils ist der direkte Anschluss des Profils der Beifahrerseite und der Stütze zum Fahrzeugboden möglich. Die Integration des Lagerbocks für die Lenksäule ermöglicht eine optimale Kraftübertragung zwischen Lenksäule, A-Säule der Fahrerseite und Stütze zum Fahrzeugboden. Weiterhin ist durch die Integration der Verstärkungselemente und des Lagerbocks der Lenkung sowie des Verbindungsknotens ein Verschweißen oder Verschrauben dieser Einzelteile nicht mehr notwendig. Die Spannungen innerhalb des Trägers werden dadurch minimiert.

Vorteile der erfindungsgemäßen Konstruktion:
- hohe Genauigkeit durch Integration der Einzelbauteile in einem komplexen Bauteil;
- sehr stabiles und verwindungssteifes System;
- durch Auswahl geeigneter Legierung hohe Dehnung im Fahrzeugcrash möglich;
- kostengünstige Bauweise, da keine spanende Bearbeitung notwendig ist, und Integration von vielen Einzelbauteilen;
- durch die Integration der Einzelteile werden die Toleranzen minimiert.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in:
- Fig. 1:: eine Schrägsicht auf einen Teil eines Querträgers für ein Fahrzeug;
- Fig. 2:: einen vergrößerten Querschnitt durch Fig. 1 etwa nach deren Linie II-II.

Ein Querträger 10 für ein aus Gründen der Übersichtlichkeit nicht dargestelltes Instrumententafelfeld im Automobilbau nimmt verschiedene Bauteile im Bereich der Instrumententafel sowie des Cockpits auf. Dieser Querträger 10 wird von zwei -- aus Blech (FS) geformten und miteinander verschweißten -- Halbschalen 12 gebildet, deren jede eine Seitenwand 14 der Höhe a aufweist sowie eine dazu rechtwinkelig verlaufende Querwand 16 der Breite b. Beide Halbschalen 12 sind in dem von ihnen begrenzten Innenraum 11 durch Zwischenwände 18 verbunden.

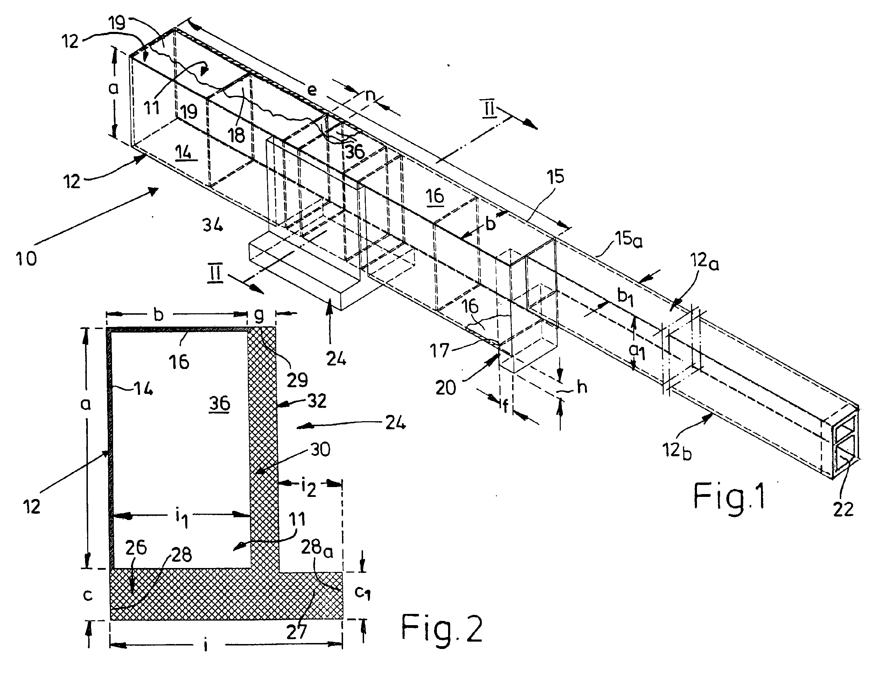

In einem Abstand e zu einer in Fig. 1 links erkennbaren Stirnwand 19 des Querträgers 10 ist an die Winkelkante 15 der einen Halbschale 12 die Winkelkante 15ₐ einer -- teilweise -- fluchtend weiteren Halbschale 12ₐ geringeren Querschnitts ausgesetzt. Letztere wird durch eine Halbschale 12_{b} gleichen Querschnitts ergänzt, und beide sind jeweils von einer Höhe a₁ sowie einer Breite b₁. Am Übergang von den größeren Halbschalen 12 zu den querschnittskleineren Halbschalen 12ₐ, 12_{b} ist ein Gusskörper 20 der Breite f als Verbindungsknoten zu erkennen, welches/welcher nach unten hin die Querwand 16 der in Fig. 1 unteren Halbschale 12 des Querträgers 10 im Bereich einer Ausklinkung 17 durchsetzt und die Unterfläche dieser Querwand 16 um ein Maß h unterkragt.

Am Ende des beschriebenen -- der Beifahrerseite des Fahrzeuges zuzuordnenden -- Abschnitts 12ₐ des Querträgers 10 ist ein rahmenartiges Schließteil 22 aus BFS angeordnet.

Bei 24 ist ein weiteres Gußteil als Lagerbock für die Lenkung zu erkennen mit einer Bodenplatte 26 der Querschnittslänge i sowie einer größten Dicke c; von dieser Bodenplatte 26 ragt in einem -- der Breite b der Querwand 16 entsprechenden -- Abstand i₁ von ihrer einen Längskante 28 eine Längswand 30 der Dicke g auf, deren Höhe a jener der Seitenwand 14 der Halbschale 12 entspricht, welch letztere einerseits mit der Längs- oder Körperwand 30 nahe deren Firstfläche 29 sowie anderseits mit der Bodenplatte 26 an deren Längskante 28 verschweißt ist. An der Außenfläche 32 der Körperwand 30 vermindert sich die Dicke c der Bodenplatte 26 auf ein Maß c₁ eines -- die andere Längskante 28ₐ enthaltenden -- Kragabschnitts 27 der Kraglänge i₂; diese entspricht etwa dem halben Abstand i₁ bzw. einem Viertel der Höhe a.

In das Gussteil oder den Lagerbock 24 sind Schotteile 34 der Lenkung für das Fahrzeug integriert; das Schotteil 34 besteht hier aus zwei zueinander in Abstand n parallelen Wandplatten 36.

Das Gussteil des Lagerbockes 24 verläuft etwa von der Lenksäulenanbindung bis in Fahrzeuglängsachse und bildet gemäß Fig. 2 mit der angeschweißten Blechhalbschale 12 ein geschlossenes Profil.

## Patentansprüche

1. Querträger in Blechschalenbauweise für ein Instrumententafelfeld im Automobilbau mit einem Anschlussblock für eine Lenksäule,
**dadurch gekennzeichnet,**
**dass** ein dem Lenksäulenbereich zugeordnetes, mit einer Bodenplatte (26) und einer an diese angeformten Längswand (30) versehenes Gussteil (24) mit einer querschnittlich winkelartig aus einem Blech geformten Halbschale (12) fest verbunden ist und Gussteil sowie Halbschale ein geschlossenes Profil (10) bilden.

2. Querträger nach Anspruch 1, **dadurch gekennzeichnet, dass** die Längswand (30) in Abstand (i₁ bzw. i₂) zu den Längskanten (28 bzw. 28ₐ) von der Bodenplatte (26) aufragt.

3. Querträger nach Anspruch 2, **dadurch gekennzeichnet, dass** der Abstand (i₁) der Längswand (30) von der einen Längskante (28ₐ) der Bodenplatte (26) etwa dem halben Abstand (i) von der anderen Längskante (28) entspricht.

4. Querträger nach Anspruch 1 oder 2, **dadurch gekennzeichnet, dass** die Halbschale (12) eine Seitenwand (14) sowie eine dazu etwa rechtwinkelige Querwand (16) aufweist sowie die Seitenwand einer Längskante (28) der Bodenplatte (26) und die Querwand der Firstfläche (29) der Längswand (30) zugeordnet sind.

5. Querträger nach einem der Ansprüche 1 bis 4, **dadurch gekennzeichnet, dass** Gussteil (24) und Halbschale (12) miteinander einen Innenraum (11) begrenzen.

6. Querträger nach Anspruch 5, **dadurch gekennzeichnet, dass** der Innenraum (11) etwa rechteckigen Querschnittes ist.

7. Querträger nach einem der Ansprüche 1 bis 6, **dadurch gekennzeichnet, dass** das Gussteil (24) und Halbschale (12) miteinander verschweißt sind.

8. Querträger nach einem der Ansprüche 2 bis 7, **dadurch gekennzeichnet, dass** die Dicken (c bzw. c₁) der beiden Längskanten (28 bzw. 28ₐ) der Bodenplatte (26) von unterschiedlicher Länge sind.

9. Querträger nach einem der Ansprüche 1 bis 8, **dadurch gekennzeichnet, dass** zwischen Gussteil (24) und Halbschale (12) zumindest ein Schottteil (34) aus zwei parallelen Wandplatten (36) festgelegt ist.

10. Querträger nach einem der Ansprüche 1 bis 9, **dadurch gekennzeichnet, dass** die Halbschale (12) das Gussteil (24) beidends überragt sowie die Halbschale durch eine zweite Halbschale (12) zu dem Querträger (10) ergänzt ist.

11. Querträger nach Anspruch 10, **dadurch gekennzeichnet, dass** der Querträger (10) einends durch einen Gusskörper (20) verschlossen und an diesen ein Hohlprofil geringeren Querschnitts aus zwei Halbschalen (12ₐ, 12_{b}) angefügt ist.

12. Querträger nach Anspruch 11, **dadurch gekennzeichnet, dass** eine Winkelkante (15ₐ) des Hohlprofils (12ₐ, 12_{b}) geringeren Querschnitts mit einer Winkelkante (15) des Hohlprofils (12, 12ₐ) größeren Querschnitts fluchtet.

13. Querträger nach Anspruch 11 oder 12, **dadurch gekennzeichnet, dass** das Hohlprofil (12ₐ, 12_{b}) geringeren Querschnitts an seinem freien Ende mit einem Schließteil (22) versehen ist.

14. Querträger nach einem der Ansprüche 1 bis 14, **gekennzeichnet durch** wenigstens ein weiteres der in Beschreibung und/oder Zeichnung offenbarten Merkmale.
